# EUROPÄISCHE PATENTSCHRIFT

(11) **EP 0 570 752 B1**
(45) Veröffentlichungstag und Bekanntmachung des Hinweises auf die Patenterteilung: **23.12.1998**
(21) Anmeldenummer: 93107163.3
(22) Anmeldetag: 03.05.1993
(51) Int. Cl.: G06F 9/44, H04M 11/06

(54) **Verfahren zur Steuerung der Abfrage bzw. Änderung von Betriebsparametern einer programmgesteuerten elektrischen Einrichtung**
Method of controlling the read-out and/or alteration of the operating parameters of a program-controlled electrical device
Procédé pour gérer la lecture ou modification des paramètres d'opération d'un dispositif électrique commandé par programme

(30) Priorität: 20.05.1992 DE 4216717
(43) Veröffentlichungstag der Anmeldung: 24.11.1993
(73) Patentinhaber: SIEMENS AKTIENGESELLSCHAFT, 80333 München (DE)
(72) Erfinder: Rudorff, Ingo, Dipl.-Ing., W-8000 München 83 (DE); Schürmann, Cornelius, Dipl.-Ing., W-8000 München 83 (DE)

(56) Entgegenhaltungen:
- EP-A- 0 338 290
- DE-A- 3 921 617

## Beschreibung

Die Erfindung betrifft ein Verfahren gemäß Oberbegriff des Patentanspruches 1. Ein solches Verfahren ist bereits bekannt (EP 0 179 229 B1). Mit diesem bekannten Verfahren ist es lediglich möglich, unmittelbar an der elektrischen Einrichtung Betriebsparameter anzuzeigen bzw. deren Änderung vorzunehmen. Für allgemeine Anwendungsfälle ist es jedoch häufig erwünscht, eine Abfrage bzw. Änderung von Betriebsparametern einer programmgesteuerten elektrischen Einrichtung durch eine von dieser abgesetzte Bedieneinrichtung vorzunehmen.

Darüber hinaus ist es bereits bekannt (EP 0 338 290), eine für den Betrieb der elektrischen Einrichtung erforderliche Betriebs-Steuerbefehlsfolge mit Hilfe einer an eine Schnittstellenanordnung der betreffenden elektrischen Einrichtung angeschlossenen mikroprozessorgesteuerten Ladeeinrichtung in eine der elektrischen Einrichtung zugehörige Speicheranordnung zu laden. Dafür wird einerseits in der Ladeeinrichtung mit dem Zuführen der für diese erforderlichen Betriebsspannung bzw. Betriebsspannungen eine Übertragungs-Steuerbefehlsfolge und andererseits in der elektrischen Einrichtung auf ein von der Ladeeinrichtung her abgegebenes Steuersignal eine Lade-Steuerbefehlsfolge aktiviert. Nach diesem Aktivieren erfolgt dann eine Übertragung einer zunächst in der Ladeeinrichtung gespeicherten Betriebs-Steuerbefehlsfolge und deren anschließende Speicherung in einer der elektrischen Einrichtung zugehörigen Speicheranordnung.

Es ist nun Aufgabe der vorliegenden Erfindung, einen Weg zu zeigen, wie ein Verfahren gemäß Patentanspruch 1 ausgebildet werden kann, um die Betriebsart bzw. den Betriebszustand einer programmgesteuerten elektrischen Einrichtung betreffende Betriebsparameter mit einem geringen Steuerungsaufwand durch eine gesonderte Bedieneinrichtung abfragen bzw. ändern zu können.

Gelöst wird diese Aufgabe durch die im Patentanspruch 1 angegebenen Verfahrensmerkmale. Die Erfindung bringt dabei den Vorteil mit sich, daß unter der Steuerung der als Hintergrundroutine ablaufenden Bedienungsroutine im laufenden Betrieb der elektrischen Einrichtung zunächst deren aktuelle Betriebsparameter durch die Bedienungseinrichtung abgefragt und anschließend ggf. geändert werden können. Ein weiterer Vorteil besteht darin, daß zwar durch die Bedienungseinrichtung sämtliche aktuelle Betriebsparameter der elektrischen Einrichtung abgefragt werden können, eine Änderung dagegegen lediglich für solche Betriebsparameter zugelassen wird, für welche in der elektrischen Einrichtung eine entsprechende Markierungsinformation hinterlegt ist. Damit sind in der elektrischen Einrichtung selbst für die Überprüfung der Zulässigkeit bzw. Nichtzulässigkeit der Änderung von Betriebsparamtern keine Steuerungsvorgänge erforderlich, durch deren Ablauf der normale Betrieb der elektrischen Einrichtung beeinträchtigt werden könnte.

Vorteilhafte Ausgestaltungen der Verfahrens gemäß der vorliegenden Erfindung ergeben sich aus den Patentansprüchen 2 bis 7. Der Vorteil der Ausgestaltung gemäß Patentanspruch 2 besteht dabei darin, daß mit einem geringen zusätzlichen Steuerungsaufwand durch die Bedieneinrichtung wahlweise Betriebsparameter einer mit dieser direkt verbundenen oder einer von der Bedieneinrichtung abgesetzten elektrischen Einrichtung abgefragt und geändert werden können. Ein weiterer Vorteil besteht darin, daß für letzteres ein ohnehin zwischen zwei elektrischen Einrichtungen bestehender Verbindungsweg benutzt wird, so daß keine gesonderten Steuerleitungen zwischen der Bedieneinrichtung und einer davon abgesetzten elektrischen Einrichtung erforderlich sind.

Durch die Patentansprüche 3 und 4 sind zwei alternative Lösungen angegeben, wie in einfacher Weise die den einzelnen Betriebsparametern zugeordneten Markierungsinformationen innerhalb eines Datenblockes übertragen werden können.

Die Ausgestaltung gemäß Patentanspruch 5 bringt den Vorteil mit sich, daß der Bedieneinrichtung im Zuge der Abfrage von Betriebsparametern unabhängig von den diesen zugeordneten Markierungsinformationen beispielsweise durch autorisiertes Bedienpersonal eine generelle Änderungsfreigabe sämtlicher Betriebsparameter signalisiert werden kann.

Durch die Ausgestaltung gemäß Patentanspruch 6 ist in einfacher Weise sichergestellt, daß lediglich fehlerfrei übertragene Informationen zu einer Anzeige in der Bedieneinrichtung bzw. zu einer Änderung von Betriebsparametern in der elektrischen Einrichtung führen.

Die Ausgestaltung gemäß Patentanspruch 7 bringt den Vorteil mit sich, daß für den Fall, daß elektrische Einrichtungen in unterschiedlichen Geräteversionen vorliegen können, der Bedieneinrichtung automatisch die Geräteversion der jeweiligen elektrischen Einrichtung signalisiert wird.

Im folgenden wird nun die vorliegende Erfindung anhand von Zeichnungen näher erläutert.

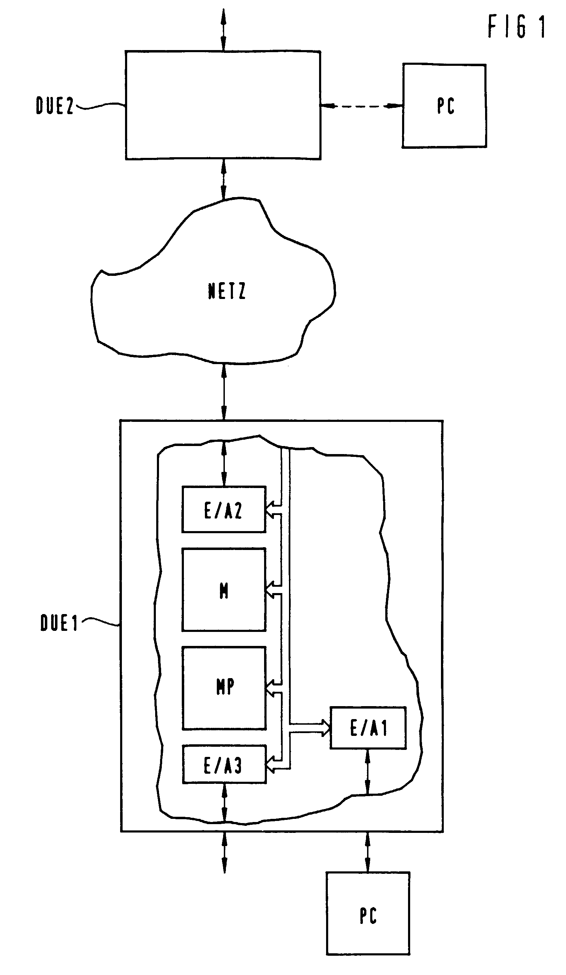

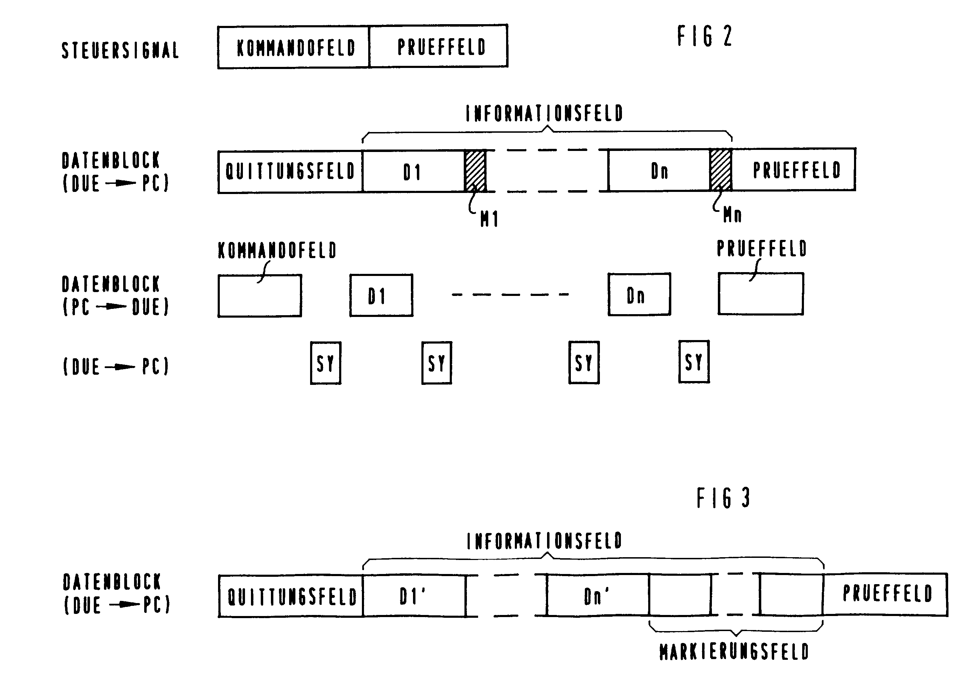

FIG 1 zeigt in einem Blockschaltbild die Verbindung zweier elektrischer Einrichtungen in Form von Datenübertragungseinrichtungen sowie eine an eine der Datenübertragungseinrichtungen angeschlossene Bedieneinrichtung und FIG 2 und 3 zeigen die Strukturen von Datenblöcken, auf welche im folgenden näher eingegangen wird.

In FIG 1 sind zwei miteinander verbundene elektrische Einrichtungen DUE1 und DUE2 dargestellt, bei denen es sich beispielsweise um in gleicher Weise aufgebaute Datenübertragungseinrichtungen handeln möge, über welche Teilnehmerendeinrichtungen an ein Datenvermittlungsnetz anschließbar sind. Wie dargestellt, möge die Verbindung dieser Datenübertragungseinrichtungen dabei über ein derartiges Datenvermittlungsnetz erfolgen.

Bei jeder der Datenübertragungseinrichtungen DUE1 und DUE2 handelt es sich um eine programmgesteuerte Einrichtung, die beispielsweise eine Mikroprozessor-Anordnung aufweisen möge. In FIG 1 ist dabei lediglich ausschnittweise die Mikroprozessor-Anordnung für die Datenübertragungseinrichtung DUE1 dargestellt. Danach ist an ein Busleitungssystem eines Mikroprozessors MP, bei dem es sich beispielsweise um einen sogenannten Ein-Chip-Mikroprozessor handeln möge, eine Speicheranordnung M angeschlossen. Diese Speicheranordnung weise beispielsweise einen als Programmspeicher dienenden Festwertspeicher sowie einen während des Betriebs der Datenübertragungseinrichtung als Datenspeicher dienenden Schreib-Lese-Speicher auf. In dem Festwertspeicher sind dabei u.a. eine Bedienungsroutine und eine Übertragungs-Routine gespeichert, auf die im folgenden noch näher eingegangen wird. Darüber hinaus sind in dem Festwertspeicher oder in einem festgelegten Bereich des Schreib-Lese-Speichers die Betriebsart bzw. den Betriebszustand der Datenübertragungseinrichtung betreffende Betriebsparameter hinterlegt.

An das genannte Busleitungssystem des Mikroprozessors sind weiterhin drei Schnittstellenanordnungen E/A1, E/A2 und E/3 angeschlossen. Die Schnittstellenanordnungen E/A2 und E/A3 dienen dabei für die Aufnahme und Abgabe von Datensignalen über Teilnehmerleitungen bzw. über das genannte Datenvermittlungsnetz. Die Schnittstellenanordnung E/A1 ist dagegen als Bedienschnittstelle für die Übertragung von Steuersignalen vorgesehen. An diese ist, wie in FIG 1 dargestellt, eine Bedieneinrichtung PC beispielsweise in Form eines Personalcomputers anschließbar. Von dieser Bedieneinrichtung her sind die zuvor genannten Betriebsparameter der Datenübertragungseinrichtung abfragbar bzw. änderbar. Dafür ist in der Bedieneinrichtung PC eine Bedienungsroutine gespeichert.

Wie aus FIG 1 weiterhin hervorgeht, ist die gerade erwähnte Bedieneinrichtung PC auch alternativ an die Datenübertragungseinrichtung DUE2 anschließbar. Für die folgenden Erläuterungen wird jedoch davon ausgegangen, daß diese Bedieneinrichtung lediglich mit der Datenübertragungseinrichtung DUE1 verbunden ist.

Im folgenden wird davon ausgegangen, daß die beiden Datenübertragungseinrichtungen DUE1 und DUE2 sich jeweils in ihrem Betriebszustand befinden, d.h. daß über diese beispielsweise eine Datenkommunikation zwischen zwei Teilnehmer-Endeinrichtungen des Datenvermittlungsnetzes stattfindet. Dafür sind in jeder der beiden Datenübertragungseinrichtungen neben den eigentlichen Betriebsprogrammen oben bereits erwähnte Betriebsparameter gespeichert, durch welche die Betriebsart bzw. der Betriebszustand festgelegt ist. Als Beispiele für derartige Betriebsparameter seien das verwendete Übertragungsprinzip (z.B. synchrone Übertragung gemäß der CCITT-Empfehlung X.21), das für eine synchrone Übertragung benutzte sogenannte Envelopeformat (z.B. 8 Datenbits + Alignmentbit und Statusbit bzw. 6 Datenbits + Alignmentbit und Statusbit), die zu benutzende Übertragungsgeschwindigkeit, die Auswertungsart der mit den Envelopes übertragenen Statusbits und die vorgesehene Verbindungsauslösevariante genannt. Zu jedem dieser Betriebsparameter ist in der jeweiligen Datenübertragungseinrichtung (DUE1 bzw. DUE2) zusätzlich eine Markierungsinformation beispielsweise in Form eines Markierungsbits gespeichert. Durch den logischen Pegel eines solchen Markierungsbits ist dabei festgelegt, ob der zugeordnete Betriebsparameter im Zuge einer im folgenden noch zu erläuternden Bedienung geändert werden darf oder nicht. Die Einstellung der einzelnen Markierungsbits, die beispielsweise in dem oben bereits erwähnten Festwertspeicher gespeichert sind, kann beispielsweise vor Inbetriebnahme der jeweiligen Datenübertragungseinrichtung festgelegt sein.

Ist nun während des Betriebs beispielsweise eine Abfrage und Änderung der in der Datenübertragungseinrichtung DUE1 gespeicherten Betriebsparameter vorgesehen, so wird die bereits oben erwähnte Bedieneinrichtung PC an die Bedienschnittstelle E/A1 der Datenübertragungseinrichtung DUE1 angeschlossen. Dieses Anschließen bewirkt, daß durch den Mikroprozessor MP der Datenübertragungseinrichtung DUE1 eine als Hintergrundroutine zu den zuvor erwähnten Betriebsprogrammen ablaufende Bedienungsroutine aktiviert wird, unter deren Steuerung zunächst zu der Bedieneinrichtung PC hin ein Informationssignal SY übertragen wird. Durch dieses wird einerseits die Bereitschaft für eine Bedienungseingabe und andererseits der Betriebszustand bzw. der Gerätetyp (Geräteversion) der Datenübertragungseinrichtung DUE1 angezeigt. Auf dieses Informationssignal hin wird in der Bedieneinrichtung PC eine Bedienungsroutine aktiviert, unter deren Steuerung zunächst ein der Abfrage von Betriebsparametern dienendes Steuersignal zu der Datenübertragungseinrichtung DUE1 hin übertragen wird. Dieses Steuersignal kann dabei beispielsweise, wie aus FIG 2 hervorgeht, aus einem Kommandofeld mit einer festgelegten Anzahl von Bits gebildet sein, welchem ein ebenfalls eine vorgegebene Anzahl von Bits umfassendes Prüffeld angefügt ist. Das Steuersignal ist dabei durch eine bestimmte Bitkombination der zu dem Kommandofeld gehörenden Bits festgelegt. Die in dem Prüffeld enthaltene Information dient dagegen in der Datenübertragungseinrichtung für eine Überprüfung auf eine fehlerfreie Übertragung des betreffenden Steuersignales. Dafür kann beispielsweise in dem Prüffeld ein Prüfsumme eingetragen sein, welche sich aus einer binären Addition sämtlicher in dem Kommandofeld enthaltenen Bits ergibt. Anstelle einer solchen Prüfsumme können jedoch auch für die Überprüfung des Kommandofeldes anderweitige Prüfinformationen enthalten sein.

Bei Vorliegen eines fehlerfrei übertragenen Steuersignales wird dann im laufenden Betrieb von der Datenübertragungseinrichtung DUE1 unter der Steuerung der aktivierten Bedienungsroutine ein Datenblock gebildet und über die Bedienschnittstelle E/A1 zu der Bedieneinrichtung PC hin übertragen. Ein solcher Datenblock, der in FIG 2 schematisch dargestellt ist, weist dabei ein dem zuvor erwähnten Kommandofeld des Steuersignals entsprechendes Quittungsfeld mit einer festgelegten Bitkombination auf, welchem ein Informationsfeld angefügt ist. Dieses Informationsfeld möge dabei aus einer Mehrzahl von Abschnitten mit jeweils einer vorgegebenen Anzahl von Bits, beispielsweise 8 Bits, gebildet sein. In jedem dieser Abschnitte, die in FIG 1 mit D1 bis Dn bezeichnet sind, sind dabei Informationen bezüglich wenigstens eines der in der Datenübertragungseinrichtung gespeicherten Betriebsparameter sowie eine oben bereits erwähnte Markierungsinformation enthalten. Diese Markierungsinformationen sind entsprechend ihrer Zuordnung zu den einzelnen Abschnitten mit M1 bis Mn bezeichnet. Ein solcher Datenblock ist schließlich durch ein dem oben erwähnten Prüffeld entsprechendes Prüffeld abgeschlossen.

Auf den Empfang eines Datenblockes erfolgt zunächst in der Bedieneinrichtung PC mit Hilfe der in dem Prüffeld enthaltenen Information eine Überprüfung auf eine fehlerfreie Übertragung des gerade empfangenen Datenblockes. Hierzu kann in dem Prüffeld wiederum eine Prüfsumme enthalten sein, die sich aus einer binären Addition sämtlicher in dem Quittungsfeld und Informationsfeld enthaltenen Bits ergibt. Liegt eine fehlerfreie Übertragung vor, so werden die in dem Informationsfeld enthaltenen Informationen ggf. nach einer Bearbeitung zu einer Anzeige auf einer Anzeigeanordnung der Bedieneinrichtung PC beispielsweise in Form eines Bildschirmes gebracht, um einem Bediener der Bedieneinrichtung die aktuellen Betriebsparameter der Datenübertragungseinrichtung DUE1 anzuzeigen. Liegt dagegen eine fehlerhafte Übertragung eines Datenblockes vor, so unterbleibt eine derartige Anzeige und es wird das zuvor erwähnte Steuersignal nochmals zu der Datenübertragungseinrichtung DUE1 hin übertragen, um in dieser ein erneutes Aussenden des Datenblockes zu veranlassen.

Anhand der Anzeige der Betriebsparameter auf der genannten Anzeigeanordnung können durch einen Bediener die Betriebsparameter geändert werden, wobei von der Bedieneinrichtung PC her nach Maßgabe der den Betriebsparametern beigefügten Markierungsinformationen (Markierungsbits) Änderungen lediglich für solche Betriebsparameter zugelassen werden, welche durch die zugehörige Markierungsinformation als änderbar bezeichnet sind. Auf eine Änderung eines oder mehrerer Betriebsparameter hin wird dann von der Bedieneinrichtung unter der Steuerung der in dieser gerade ablaufenden Bedienungsroutine ein dem zuvor erläuterten Datenblock entsprechender Datenblock gebildet und dieser zu der Datenübertragungseinrichtung DUE1 hin übertragen. Abweichend von den zuvor erläuterten Übertragungsvorgängen erfolgt dabei die Übertragung des gerade gebildeten Datenblockes nicht als geschlossene Einheit, sondern, wie aus FIG 2 hervorgeht, abschnittweise nach einem sogenannten "Handshaking"-Prinzip. Die Abschnitte sind dabei aus einem dem zuvor erwähnten Quittungssignal entsprechenden Kommandofeld, den in dem Informationsfeld enthaltenen, mit D1 bis Dn bezeichneten Bitgruppen und dem Prüffeld gebildet. Jeder einzelne Abschnitt wird dabei von der Datenübertragungseinrichtung DUE1 her durch ein oben bereits erwähntes Informationssignal SY gesondert quittiert, d.h. daß ein für eine Übertragung gerade anstehender Abschnitt erst dann von der Bedieneinrichtung abgegeben wird, nachdem der diesem Abschnitt unmittelbar vorangegangene Abschnitt von der Datenübertragungseinrichtung quittiert worden ist. Damit wird erreicht, daß die in einem Datenblock enthaltenen Informationen nacheinander ohne Unterbrechung des laufendes Betriebes der Datenübertragungseinrichtung aufgenommen und zunächst zwischengespeichert werden können. Erst bei Vorliegen des vollständigen Datenblockes in der Datenübertragungseinrichtung DUE1 erfolgt unter der Steuerung der in dieser ablaufenden Bedienungsroutine anhand der dem Datenblock beigefügten Prüfinformation eine Überprüfung auf eine fehlerfreie Übertragung und bei Erkennen einer Fehlerfreiheit eine Änderung der bisher in der Datenübertragungseinrichtung gespeicherten, relevanten Betriebsparameter, und zwar durch deren Überschreiben durch die in dem gerade empfangenen Datenblock empfangenen Informationen. Die vorliegende Änderung der Betriebsparameter wird dabei der Bedieneinrichtung PC durch Übertragen eines Quittungssignales signalisiert, welches wenigstens aus einem Quittungsfeld mit einer festgelegten Bitcodierung und einem Prüffeld gebildet ist. Im Fehlerfalle wird dagegen der Bedieneinrichtung PC ein negatives Quittungssignal (festgelegte Bitcodierung) zugeführt, durch welches eine erneute Übertragung des gerade fehlerhaft empfangenen Datenblockes angefordert wird.

Im übrigen ist zumindest in einem von der Datenübertragungseinrichtung DUE1 abgegebenen Datenblock zusätzlich ein Steuerbit beispielsweise am Ende des Informationsfeldes enthalten. Dieses Steuerbit ist dem zuvor erwähnten Markierungsinformationen (Markierungsbits M1 bis Mn) übergeordnet und signalisiert bei Auftreten mit einem festgelegten logischen Pegel unabhängig von den einzelnen Markierungsinformationen eine generelle Änderungsfreigabe der in der Datenübertragungseinrichtung gespeicherten Betriebsparameter. Das Setzen dieses Steuerbits auf den festgelegten logischen Pegel erfolgt dabei durch ein extern zugängliches Betätigungselement der Datenübertragungseinrichtung. Um sicherzustellen, daß diese Betätigung lediglich durch autorisiertes Bedienpersonal vorgenommen werden kann, ist dieses Betätigungselement durch eine Plombiervorrichtung gesichert. Dabei ist vorgesehen, daß der auf die Betätigung des Bedienungselementes hin gesetzte logische Pegel des Steuerbits lediglich für eine festgelegte Zeitspanne erhalten bleibt und nach Ablauf dieser Zeitspanne ein Pegelwechsel stattfindet. Damit ist eine gesonderte Aufhebung der generellen Änderungsfreigabe der Betriebsparameter nicht erforderlich.

Alternativ zu einem solchen externen Betätigungselement der Datenübertragungseinrichtung DUE1 und dem dadurch beeinflußten Steuerbit können auch in der Bedieneinrichtung PC Vorkehrungen getroffen sein, die es einem autorisierten Bedienpersonal ermöglichen, unabhängig von den durch die Datenübertragungseinrichtung DUE1 gelieferten Markierungsinformationen für die einzelnen Betriebsparameter eine Änderungsfreigabe dieser Betriebsparameter zu bewirken.

Im übrigen können die zuvor erläuterten Datenblöcke auch so ausgebildet sein, daß die den Betriebsparametern zugeordneten Markierungsinformationen nicht, wie in FIG 2 dargestellt, den einzelnen Betriebsparametern unmittelbar beigefügt sind, sondern zusammengefaßt am Ende eines Informationsfeldes übertragen werden. Ein daraus resultierender Datenblock ist in FIG 3 schematisch dargestellt. Mit D1' bis Dn' sind dabei Bitgruppen bezeichnet, die lediglich Informationen bezüglich der einzelnen Betriebsparameter enthalten.

Vorstehend wurde die Abfrage und Änderung von Betriebsparametern mit Hilfe der Bedieneinrichtung PC lediglich am Beispiel der Datenübertragungseinrichtung DUE1 erläutert. Die vorstehenden Ausführungen gelten jedoch auch sinngemäß für die Datenübertragungseinrichtung DUE2, wenn an dieser eine der Bedieneinrichtung PC entsprechende Bedieneinrichtung angeschlossen ist. Damit ist es also möglich, die beiden Datenübertragungseinrichtungen unabhängig voneinander auf bestimmte Betriebsparameter einzustellen.

Zusätzlich oder alternativ zu dem zuvor erläuterten Abfragen und Ändern von Betriebsparametern in der mit der Bedieneinrichtung PC direkt verbundenen Datenübertragungseinrichtung DUE1 kann von der Bedieneinrichtung PC her auch über diese Datenübertragungseinrichtung eine Fernabfrage und Fernänderung von in der Datenübertragungseinrichtung DUE2 gespeicherten Betriebsparametern erfolgen. Hierzu gibt die Bedieneinrichtung ein Steuersignal gemäß FIG 2 mit einer festgelegten Bitkodierung des Kommandofeldes ab. Auf dieses Steuersignal hin aktiviert der Mikroprozessor MP der Datenübertragungseinrichtung DUE1 nach einer Überprüfung dieses Steuersignals auf einen fehlerfreien Empfang eine Übertragungs-Routine, die in dem oben erwähnten Festwertspeicher dieser Datenübertragungseinrichtung gespeichert ist. Unter der Steuerung dieser Übertragungs-Routine leitet dann die Datenübertragungseinrichtung DUE1 ein dem gerade empfangenen Steuersignal entsprechendes, an das innerhalb des Datenvermittlungsnetzes benutzte Datensignalformat angepaßtes Steuersignal über die Schnittstellenanordnung E/A2 an die Datenübertragungseinrichtung DUE2 weiter. Der Mikroprozessor dieser Datenübertragungseinrichtung aktiviert daraufhin die in dieser als Hintergrundroutine gespeicherte Bedienungsroutine, und zwar nach einer vorausgegangenen Überprüfung des Steuersignales hinsichtlich einer fehlerfreien Übertragung. Nach dieser Aktivierung erfolgt dann eine Kommunikation zwischen der Bedieneinrichtung PC und der Datenübertragungseinrichtung DUE2 in der oben erläuterten Weise, jedoch nunmehr unter Einbeziehung der Datenübertragungseinrichtung DUE1. Die Aufgabe der Datenübertragungseinrichtung DUE1 besteht dabei einerseits in einer Weiterleitung der zwischen der Bedieneinrichtung PC und der Datenübertragungseinrichtung DUE2 auszutauschenden Signale. Andererseits erfolgt durch die Datenübertragungseinrichtung DUE1 eine Überprüfung dieser Signale auf eine fehlerfreie Übertragung, welche in der oben bereits erwähnten Weise durchgeführt wird. Ein Übertragungsfehler wird dabei der Bedieneinrichtung PC bzw. der Datenübertragungseinrichtung DUE2 durch ein Fehlersignal mit einem entsprechend kodierten Kommandofeld angezeigt.

Abschließend sei noch darauf hingewiesen, daß zwar vorstehend die vorliegende Erfindung am Beispiel zweier miteinander verbundener Datenübertragungseinrichtungen erläutert worden ist. Die vorliegende Erfindung ist jedoch nicht darauf beschränkt, sondern sie ist vielmehr allgemein dann anwendbar, wenn die Betriebsart bzw. den Betriebszustand ggf. miteinander verbundener programmgesteuerter elektrischer Einrichtungen betreffende Betriebsparameter abzufragen bzw. zu ändern sind.

## Patentansprüche

1. Verfahren zur Steuerung der Abfrage bzw. Änderung von die Betriebsart bzw. den Betriebszustand einer programmgesteuerten elektrischen Einrichtung (z.B. DUE1), insbesondere Datenübertragungseinrichtung, betreffenden, in einer der elektrischen Einrichtung zugehörenden Speicheranordnung (M) gespeicherten Betriebsparametern,
**dadurch gekennzeichnet,**
daß eine Bedieneinrichtung (PC) an eine gesonderte Bedienschnittstelle (E/A1) der elektrischen Einrichtung angeschlossen wird,
daß von der Bedieneinrichtung (PC) ein erstes Steuersignal abgegeben wird, auf dessen Empfang hin von der elektrischen Einrichtung im Zuge einer während des Betriebs der elektrischen Einrichtung als Hintergrundroutine ablaufenden Bedienungsroutine ein Datenblock zu der Bedieneinrichtung hin übertragen wird, welcher zumindest Informationen bezüglich sämtlicher Betriebsparameter sowie diesen zugeordnete, eine Änderungsfreigabe bzw. Änderungssperre des jeweiligen Betriebsparameters anzeigende Markierungsinformationen enthält,
daß durch die Bedieneinrichtung (PC) lediglich solche Betriebsparameter für eine Änderung freigegeben werden, deren Änderungsfreigabe durch die zugehörige Markierungsinformation angezeigt ist,
daß auf eine Änderung wenigstens eines der Betriebsparameter von der Bedieneinrichtung (PC) ein dem genannten Datenblock entsprechender Datenblock gebildet und abschnittweise unter einem individuellen Quittieren jedes der Abschnitte des Datenblockes durch die elektrische Einrichtung übertragen wird
und daß durch die elektrische Einrichtung (DUE1) lediglich auf den vollständigen Empfang eines Datenblockes nach Maßgabe der darin enthaltenen Informationen eine Änderung der bisher in der elektrischen Einrichtung gespeicherten Betriebsparameter vorgenommen wird.

2. Verfahren nach Anspruch 1,
**dadurch gekennzeichnet,**
daß eine mit der Bedieneinrichtung (PC) verbundene erste elektrische Einrichtung (DUE1) für eine Datenkommunikation über eine Datenschnittstelle (E/A2) mit einer zweiten programmgesteuerten elektrischen Einrichtung (DUE2) in Verbindung steht,
daß von der Bedieneinrichtung wahlweise ein von dem ersten Steuersignal abweichendes Steuersignal an die mit dieser verbundene erste elektrische Einrichtung (DUE1) abgegeben wird, auf dessen Auftreten hin in der ersten elektrischen Einrichtung eine Übertragungs-Routine aktiviert wird,
daß auf das Aktivieren der Übertragungs-Routine von der ersten elektrischen Einrichtung her ein dem zweiten Steuersignal entsprechendes Steuersignal über die Datenschnittstelle (E/A2) zu der zweiten elektrischen Einrichtung übertragen wird,
daß auf das Auftreten dieses zweiten Steuersignals hin in der zweiten elektrischen Einrichtung eine der genannten Bedienungsroutine entsprechende, als Hintergrundroutine ablaufende Bedienungsroutine aktiviert wird
und daß anschließend unter der Steuerung der betreffenden Bedienungsroutine und der Übertragungs-Routine den genannten Datenblöcken entsprechende Datenblöcke zwischen der zweiten elektrischen Einrichtung (DUE2) und der Bedieneinrichtung (PC) unter Einbeziehung der ersten elektrischen Einrichtung (DUE1) und der Datenschnittstelle (E/A1) ausgetauscht werden.

3. Verfahren nach Anspruch 1 oder 2,
**dadurch gekennzeichnet,**
daß jeder der Abschnitte eines Datenblockes aus einer Bitgruppe mit einer festgelegten Anzahl von Bits gebildet wird und in jeder der Bitgruppen Informationen bezüglich wenigstens eines Betriebparameters sowie die dem jeweiligen Betriebsparameter zugeordnete Markierungsinformation in Form eines Markierungsbits enthalten sind.

4. Verfahren nach Anspruch 1 oder 2,
**dadurch gekennzeichnet**,
daß ein Datenblock aus wenigstens einem Informationsfeld und einem Markierungsfeld mit jeweils wenigstens einer eine festgelegte Anzahl von Bits umfassenden Bitgruppe gebildet wird, daß in der jeweiligen Bitgruppe des Informationsfeldes Informationen wenigstens eines der Betriebsparameter übertragen werden,
daß in der jeweiligen Bitgruppe des Markierungsfeldes eine der festgelegten Anzahl von Bits entsprechende Anzahl von als Markierungsinformationen für die einzelnen Betriebsparameter dienenden Markierungsbits übertragen und daß der jeweilige Abschnitt eines Datenblockes durch eine Bitgruppe des Informationsfeldes bzw. des Markierungsfeldes gebildet wird.

5. Verfahren nach einem der Ansprüche 1 bis 4,
**dadurch gekennzeichnet**,
daß einem von der jeweiligen elektrischen Einrichtung (DUE1 bzw. DUE2) abgebenen Datenblock zusätzlich wenigstens ein Steuerbit angefügt ist, bei dessen Auftreten mit einem festgelegten logischen Pegel eine Änderungsfreigabe sämtlicher in dem betreffenden Datenblock enthaltener Informationen angezeigt wird
und daß das betreffende Steuerbit unter der Steuerung der in der jeweiligen elektrischen Einrichtung ablaufenden Bedienungsroutine durch Betätigen eines externen, durch eine Plombiervorrichtung gesicherten Betätigungselementes für eine vorgegebene Zeitspanne auf den festgelegten logischen Pegel gesetzt wird.

6. Verfahren nach einem der Ansprüche 1 bis 5,
**dadurch gekennzeichnet**,
daß einem Datenblock eine eine Überprüfung auf eine fehlerfreie Übertragung des betreffenden Datenblockes ermöglichende Prüfinformation beigefügt wird
und daß lediglich auf eine fehlerfreie Übertragung eines Datenblockes hin die in diesem enthaltenen Informationen zu einer Anzeige auf einer der Bedieneinrichtung (PC) zugehörigen Anzeigeanordnung gebracht werden bzw. eine Änderung der in der jeweiligen elektrischen Einrichtung gespeicherten Betriebsparameter nach Maßgabe der in dem betreffenden Datenblock enthaltenen Informationen durchgeführt wird.

7. Verfahren nach einem der Ansprüche 1 bis 6,
**dadurch gekennzeichnet,**
daß auf das Anschließen der Bedieneinrichtung (PC) an die Bedienschnittstelle (E/A1) der jeweiligen elektrischen Einrichtung sowie für jedes Quittieren eines Abschnittes eines Datenblockes von der jeweiligen elektrischen Einrichtung (DUE1) her ein die Geräteversion der jeweiligen elektrischen Einrichtung anzeigendes Informationssignal übertragen wird.

## Claims

1. Method for controlling the interrogation and/or alteration of operating parameters relating to the operating mode and/or the operating status of a programme-controlled electrical device (e.g. DUE1), particularly a data transmission device, and stored in a storage arrangement (M) belonging to the electrical device, characterized in that an operating device (PC) is connected to a separate operating interface (E/A1) of the electrical device,
that the operating device (PC) outputs a first control signal, following the reception of which via the electrical device a data block is transmitted towards the operating device in the course of an operating routine running as background routine during the operation of the electrical device, which data block contains at least information items with respect to all operating parameters and marking information items associated with these operating parameters and indicating an alteration enable or alteration inhibit of the respective operating parameter,
that the operating device (PC) only releases those operating parameters for an alteration, the alteration enable of which is indicated via the associated marking information item,
that, following an alteration of at least one of the operating parameters, the operating device (PC) forms a data block corresponding to the said data block and transmits it section by section with individual acknowledgement of each of the sections of the data block via the electrical device,
and that the electrical device (DUE1) only performs an alteration of the operating parameters hitherto stored in the electrical device as determined by the information items contained in the data block following the complete reception of this data block.

2. Method according to Claim 1, characterized in that a first electrical device (DUE1) connected to the operating device (PC) is connected to a second programme-controlled electrical device (DUE2) for a data communication via a data interface (E/A2),
that the operating device optionally outputs a control signal deviating from the first control signal to the first electrical device (DUE1) connected to this operating device, following the occurrence of which deviating control signal a transmission routine is activated in the first electrical device,
that, following the activation of the transmission routine, a control signal corresponding to the second control signal is transmitted from the first electrical device via the data interface (E/A2) to the second electrical device,
that, following the occurrence of this second control signal, an operating routine running as background routine and corresponding to the said operating routine is activated in the second electrical device,
and that subsequently, data blocks corresponding to the said data blocks are exchanged between the second electrical device (DUE2) and the operating device (PC) and including the first electrical device (DUE1) and the data interface (E/A1), under the control of the relevant operating routine and the transmission routine.

3. Method according to Claim 1 or 2, characterized in that each of the sections of a data block is formed from a bit group having a fixed number of bits and each of the bit groups contains information items with respect to at least one of the operating parameters and the marking information allocated to the respective operating parameter in the form of a marking bit.

4. Method according to Claim 1 or 2, characterized in that a data block is formed from at least one information field and one marking field containing in each case at least one bit group comprising a fixed number of bits, that information items of at least one of the operating parameters are transmitted in the respective bit group of the information field,
that in the respective bit group of the marking field, a number of marking bits serving as marking information items for the individual operating parameters and corresponding to the fixed number of bits is transmitted and that the respective section of a data block is formed by a bit group of the information field and/or the marking field.

5. Method according to one of Claims 1 to 4, characterized in that additionally at least one control bit is appended to a data block output by the respective electrical device (DUE1 and/or DUE2), at the occurrence of which control bit with a fixed logical level an alteration enable of all information items contained in the respective data block is indicated, and that the relevant control bit is set to the fixed logical level under the control of the operating routine running in the respective electrical device by actuating an external actuating element, which is secured by a sealing device, for a predetermined time interval.

6. Method according to one of Claims 1 to 5, characterized in that a test information item, which enables a check for error-free transmission of the relevant data block to be performed, is added to a data block and that the information items contained in a data block are only displayed on a display arrangement belonging to the operating device (PC) and/or the operating parameters stored in the respective electrical device are only altered as determined by the information items contained in the relevant data block following an error-free transmission of the data block.

7. Method according to one of Claims 1 to 6 characterized in that, following the connection of the operating device (PC) to the operating interface (E/A1) of the respective electrical device and for each acknowledgement of a section of a data block from the respective electrical device (DUE1), an information signal indicating the equipment version of the respective electrical device is transmitted.

## Revendications

1. Procédé pour la commande de l'interrogation ou de la modification de paramètres d'exploitation concernant le mode d'exploitation ou l'état d'exploitation d'un dispositif électrique (par exemple DUE1) commandé par programme, notamment d'un dispositif de transmission de données, et mémorisés dans un- dispositif de mémoire (M) appartenant au dispositif électrique,
caractérisé par le fait que
on raccorde un dispositif d'exploitation (PC) à une interface d'exploitation (E/A1) particulière du dispositif électrique,
le dispositif d'exploitation (PC) fournit un premier signal de commande à la réception duquel le dispositif électrique transmet au dispositif d'exploitation, au cours d'une routine d'exploitation s'exécutant en tâche de fond pendant l'exploitation du dispositif électrique, un bloc de données qui contient au moins des informations concernant tous les paramètres d'exploitation ainsi que des informations de marquage associées à ceux-ci et indiquant l'autorisation de modification ou l'interdiction de modification de chaque paramètre d'exploitation considéré,
le dispositif d'exploitation (PC) n'autorise une modification que des paramètres d'exploitation dont l'autorisation de modification est indiquée par l'information de marquage associée,
pour une modification d'au moins l'un des paramètres d'exploitation, le dispositif d'exploitation (PC) forme un bloc de données correspondant au bloc de données mentionné et le transmet segment par segment, avec un accusé de réception individuel de chacun des segments du bloc de données par le dispositif électrique, et que
le dispositif électrique (DUE1) n'effectue qu'après la réception complète d'un bloc de données et selon les informations que contient celui-ci, une modification des paramètres d'exploitation mémorisés jusqu'alors dans le dispositif électrique.

2. Dispositif selon la revendication 1,
caractérisé par le fait que
un premier dispositif électrique (DUE1) relié au dispositif d'exploitation (PC) est en liaison par l'intermédiaire d'une interface de données (E/A2) avec un deuxième dispositif électrique (DUE2) commandé par programme en vue d'une communication de données,
le dispositif d'exploitation fournit à volonté au premier dispositif électrique (DUE1) auquel il est relié un signal de commande qui est différent du premier signal de commande et à l'apparition duquel on active une routine de transmission dans le premier dispositif électrique,
après l'activation de la routine de transmission, le premier dispositif électrique transmet par l'intermédiaire de l'interface de données (E/A2) au deuxième dispositif électrique un signal de commande correspondant au deuxième signal de commande,
à l'apparition de ce deuxième signal de commande, on active dans le deuxième dispositif électrique une routine d'exploitation correspondant à la routine d'exploitation mentionnée et s'exécutant en tâche de fond, et que
ensuite, sous le contrôle de la routine d'exploitation considérée et de la routine de transmission, on échange des blocs de données correspondants aux blocs de données mentionnés entre le deuxième dispositif électrique (DUE2) et le dispositif d'exploitation (PC) en incluant le premier dispositif électrique (DUE1) et l'interface de données (E/A1).

3. Procédé selon la revendication 1 ou 2,
caractérisé par le fait que
on forme chacun des segments d'un bloc de données à partir d'un groupe de bits ayant un nombre fixé de bits et que chacun des groupes de bits contient des informations concernant au moins un paramètre d'exploitation ainsi que, sous forme de bit de marquage, l'information de marquage associée au paramètre d'exploitation respectif.

4. Procédé selon la revendication 1 ou 2,
caractérisé par le fait que
on forme un bloc de données à partir d'au moins un champ d'information et d'un champ de marquage avec à chaque fois au moins un groupe de bits comprenant un nombre fixé de bits, des informations d'au moins l'un des paramètres d'exploitation étant transmises dans le groupe de bits respectif du champ d'information,
dans le groupe de bits respectif du champ de marquage, on transmet un nombre, correspondant au nombre fixé de bits, de bits de marquage servant d'informations de marquage pour les paramètres d'exploitation individuels, et que
on forme le segment respectif d'un bloc de données avec un groupe de bits du champ d'information ou du champ de marquage.

5. Procédé selon l'une des revendications 1 à 4,
caractérisé par le fait que
on adjoint en plus à un bloc de données fourni par le dispositif électrique respectif (DUE1 ou DUE2) au moins un bit de commande dont l'occurrence avec un niveau logique fixé indique une autorisation de modification de toutes les informations contenues dans le bloc de données concerné, et que
on affecte le bit de commande considéré au niveau logique fixé pendant un intervalle de temps prédéterminé, sous le contrôle de la routine d'exploitation s'exécutant dans le dispositif électrique respectif, en manipulant un élément de manipulation externe protégé par un dispositif de plombage.

6. Procédé selon l'une des revendications 1 à 5,
caractérisé par le fait que
on adjoint à un bloc de données une information de contrôle permettant un contrôle vérifiant la transmission sans erreur du bloc de données considéré, et que
c'est seulement à la suite d'une transmission sans erreur d'un bloc de données que l'on affiche sur un dispositif d'affichage associé au dispositif d'exploitation (PC) les informations contenues dans le bloc de données considéré ou que l'on effectue une modification des paramètres d'exploitation mémorisés dans le dispositif électrique respectif d'après les informations contenues dans le bloc de données considéré.

7. Procédé selon l'une des revendications 1 à 6,
caractérisé par le fait que
à la suite du raccordement du dispositif d'exploitation (PC) à l'interface d'exploitation (E/A1) du dispositif électrique respectif ainsi que pour chaque accusé de réception d'un segment d'un bloc de données, on transmet à partir du dispositif électrique respectif (DUE1) un signal d'information indiquant la version d'appareil du dispositif électrique respectif.
